# EUROPÄISCHE PATENTSCHRIFT

(11) **EP 3 441 661 B1**
(45) Veröffentlichungstag und Bekanntmachung des Hinweises auf die Patenterteilung: **16.06.2021**
(21) Anmeldenummer: 18186249.1
(22) Anmeldetag: 30.07.2018
(51) Int. Cl.: F16L 41/08, E03F 3/04

(54) **ANSCHLUSSVORRICHTUNG**
CONNECTION DEVICE
DISPOSITIF DE RACCORDEMENT

(30) Priorität: 07.08.2017 DE 202017104709 U
(43) Veröffentlichungstag der Anmeldung: 13.02.2019
(73) Patentinhaber: REHAU AG + Co, 95111 Rehau (DE)
(72) Erfinder: Schneider, Christoph, 91074 Herzogenaurach (DE); Hendel, Roland, 91086 Aurachtal (DE); Sieber, Jürgen, 91074 Herzogenaurach (DE); Ciolak, Mariusz, 91052 Erlangen (DE); Lipphardt, Tobias, 90762 Fürth (DE)

(56) Entgegenhaltungen:
- DE-U1- 20 108 823
- DE-U1-202006 005 685
- US-A1- 2002 139 952

## Beschreibung

Die Erfindung betrifft eine Anschlussvorrichtung, die einen Elastomereinsatz und einen Anschlussstutzen umfasst.

Des Weiteren betrifft die Erfindung ein Fluidleit-, -aufnahme- und -speichersystem mit einer solchen Anschlussvorrichtung.

Eine gattungsgemäße Anschlussvorrichtung, die einen Elastomereinsatz und einen Anschlussstutzen umfasst, ist aus der DE 20 2006 005 685 U1 bekannt. Eine solche Anschlussvorrichtung ist geeignet, eine Nebenrohrleitung fluiddicht an eine Queröffnung in einer Hauptleitung, einem Schacht oder einer Wand anzuschließen. Derartige Anschlussvorrichtungen müssen sicher installierbar und dauerhaft sein und eine hohe Fluiddichtheit aufweisen.

Zur Herstellung der Anschlussvorrichtung wird zunächst der Elastomereinsatz in die Queröffnung einer Hauptleitung, eines Schachtes oder einer Wand eingesetzt, und anschließend der Anschlussstutzen in den Elastomereinsatz eingeschraubt, um die Außenfläche des Elastomereinsatzes möglichst großflächig an die Laibung der Queröffnung anzupressen.

Zum Einschrauben ist an der Innenseite des hohlstopfenförmig ausgebildeten Elastomereinsatzes ein Innengewinde ausgebildet, entsprechend an der Außenseite des Anschlussstutzens ein Außengewinde. Zum Einschrauben des Anschlussstutzens in den Elastomereinsatz zur Bildung der Anschlussvorrichtung wird im Allgemeinen ein Drehwerkzeug benutzt.

Es hat sich herausgestellt, dass die Fluiddichtheit einer solchen Anschlussvorrichtung bei nicht sachgerechter Installation, insbesondere bei nichtaxialem Einschrauben des Anschlussstutzens in den Elastomereinsatz, gegebenenfalls zu Undichtigkeiten führt und daher verbesserungsbedürftig ist.

So kann es in besonderen Fällen vorkommen, dass Fluid sich einen Weg sucht zwischen dem Außengewinde an der Außenseite des Anschlussstutzens und dem Innengewinde an der Innenseite des Elastomereinsatzes und unerwünscht aus der Anschlussvorrichtung nach außen oder von außen in die Anschlussvorrichtung dringt.

Hier setzt die Erfindung ein, der die Aufgabe zugrunde liegt, eine verbesserte Anschlussvorrichtung bereitzustellen, die gegenüber der bekannten Lösung des Standes der Technik eine verbesserte Fluiddichtheit aufweist.

Eine weitere Aufgabe der Erfindung ist es, ein Fluidleit-, -aufnahme- und -speichersystem bereitzustellen, welches eine solche Anschlussvorrichtung umfasst.

Die erste gestellte Aufgabe wird durch die Anschlussvorrichtung gemäß Anspruch 1 gelöst.

Es ist im Rahmen der vorliegenden Erfindung vorgesehen, dass die Anschlussvorrichtung für eine Nebenrohrleitung in Kombination mit einer Queröffnung in einer Hauptrohrleitung, in einem Schacht oder in einer Wand einen hohlstopfenförmigen, relativ weichen Elastomereinsatz und einen relativ härteren Anschlussstutzen umfasst, wobei der Elastomereinsatz, dessen Außenseite an die Queröffnung angepasst ist, an seiner Innenseite einen konischen Schraubbereich aufweist, und der Anschlussstutzen ein Eingriffsende, einen konischen Mittelteil mit Außengewinde, einen Aufnahmeabschnitt und ein Antriebsende.

Die erfindungsgemäße Anschlussvorrichtung zeichnet sich dadurch aus, dass der Anschlussstutzen zwischen dem konischen Mittelteil und dem Aufnahmeabschnitt einen Einschraubanschlag aufweist, wobei bei montierter Anschlussvorrichtung der Einschraubanschlag an einem Stirnflächenabschnitt des Elastomereinsatzes anliegt, wenn der Anschlussstutzen vollständig in den Elastomereinsatz eingeschraubt ist.

Durch das Vorsehen gemäß vorliegender Erfindung, dass bei montierter Anschlussvorrichtung, bei der der Anschlussstutzen in den Elastomereinsatz eingeschraubt ist, der Einschraubanschlag an einem Stirnflächenabschnitt des Elastomereinsatzes dann anliegt, wenn der Anschlussstutzen in den Elastomereinsatz vollständig eingeschraubt ist, ist eine verbesserte Anschlussvorrichtung geschaffen, die eine erhöhte Fluiddichtheit aufweist.

Durch den Einschraubanschlag der erfindungsgemäßen Anschlussvorrichtung ist der Einschraubweg des Anschlussstutzens in den Elastomereinsatz begrenzt und auf diese Weise exakt definiert.

Durch die Begrenzung und Definition des Einschraubwegs des Anschlussstutzens in den Elastomereinsatz ist eine Anschlussvorrichtung bereitgestellt, bei der sichergestellt ist, dass der konische Schraubbereich an der Innenseite des Elastomereinsatzes optimal mit dem Außengewinde am konischen Mittelteil des Anschlussstutzens zusammenwirkt, wenn der Einschraubanschlag an einem Stirnflächenabschnitt des Elastomereinsatzes anliegt, wobei der Anschlussstutzen in den Elastomereinsatz vollständig eingeschraubt ist, und hierbei ein Maximum an Dichtwirkung entfaltet.

Gleichzeit ist dadurch gewährleistet, dass die Anpressung der Außenseite des Elastomereinsatzes an die Laibung der Queröffnung in einer Hauptrohrleitung, in einem Schacht oder in einer Wand optimiert ist und auch dort Fluiddichtheit herrscht.

Es ist insbesondere sichergestellt, dass eine nicht sachgerechte Installation, insbesondere ein nichtaxiales Einschrauben des Anschlussstutzens in den Elastomereinsatz, bei dieser Anschlussvorrichtung gemäß vorliegender Erfindung ausgeschlossen oder zumindest in hohem Maße vermieden ist. Die Fluiddichtheit einer solchen Anschlussvorrichtung ist daher gegenüber einer solchen aus dem Stand der Technik wesentlich verbessert.

Die Anschlussvorrichtung kann derartig ausgebildet sein, dass der Einschraubanschlag als Kragen ausgebildet ist.

Ein als Kragen ausgebildeter Einschraubanschlag ist in besonders einfacher Weise nutzbar, das Einschrauben des Anschlussstutzens in den Elastomereinsatz zu begrenzen, indem sich der als Kragen ausgebildete Einschraubanschlag an einem Stirnflächenabschnitt des Elastomereinsatzes anlegt und so den Einschraubweg des Anschlussstutzens in den Elastomereinsatz begrenzt.

Weiterhin kann so in einfacher Weise vom installierenden Personal überprüft werden, ob der Anschlussstutzen vollständig und auch axial in den Elastomereinsatz eingeschraubt ist, was der Fall ist, wenn der Einschraubanschlag insbesondere an zwei gegenüberliegenden Stirnflächenabschnitten des Elastomereinsatzes anliegt.

Der Anschlussstutzen ist in diesem Fall sachgerecht in den Elastomereinsatz eingeschraubt, wodurch die Anschlussvorrichtung mit verbesserter Fluiddichtheit gebildet ist.

Als besonders günstig kann sich erweisen, wenn vorgesehen ist, dass die Anschlussvorrichtung derartig ausgebildet ist, dass der Einschraubanschlag senkrecht zur Achse des Anschlussstutzens angeordnet ist.

Durch einen Einschraubanschlag, der senkrecht zur Achse des Anschlussstutzens angeordnet ist, ist ein einfaches und definiertes Kontaktieren der Stirnfläche des Elastomereinsatzes möglich, wenn der Anschlussstutzen in den Elastomereinsatz eingeschraubt ist und der Einschraubweg auf diese Weise begrenzt ist.

Mit besonderem Vorteil ist an dem Einschraubanschlag eine Anschlagfläche ausgebildet, die senkrecht zur Achse des Anschlussstutzens angeordnet ist und dem Eingriffsende des Anschlussstutzens zugewandt ist.

Der Anschlussstutzen ist - bis auf das Außengewinde und die Fortsätze - in einer bevorzugen Ausbildung rotationssymmetrisch ausgebildet, was dessen Herstellung und auch die Installation wesentlich erleichtert.

Erfindungsgemäß umfasst die Anschlussvorrichtung ein Anzeigeelement, welches das vollständige Einschrauben des Anschlussstutzens in den Elastomereinsatz anzeigt.

Durch das Vorsehen eines Anzeigeelements wird dem installierenden Personal signalisiert, dass der Anschlussstutzen vollständig in den Elastomereinsatz eingeschraubt ist.

Als günstig kann sich in einer Fortbildung der vorliegenden Erfindung ein Anzeigeelement erweisen, das als weichelastischer Fortsatz ausgebildet ist.

Mit Vorteil ist das Anzeigeelement in Form eines weichelastischen Fortsatzes im Bereich der Stirnfläche des Elastomereinsatzes aufgenommen, wozu beispielsweise an der Stirnfläche eine Ausnehmung ausgebildet ist, in der der weichelastische Fortsatz eingesetzt ist. Wenn der Einschraubanschlag beim Einschrauben des Anschlussstutzens in den Elastomereinsatz in Richtung der Stirnfläche des Elastomereinsatzes bewegt wird, kommt er mit dem Anzeigeelement in Form des weichelastischen Fortsatzes in Kontakt und quetscht dieses beim weiteren Einschrauben zusammen und schließlich teilweise axial nach außen. Hierzu kann vorteilhaft eine Kontur am Elastomereinsatz ausgebildet sein, die das Herausquetschen nach außen ermöglicht, wie beispielsweise ein Kanal oder eine Nut.

Das Material des weichelastischen Fortsatzes ist entsprechend gewählt, so dass dieses Herausquetschen ermöglicht wird.

Wenn ein Abschnitt des weichelastischen Fortsatzes nach außen gequetscht ist und über den Außenrand des Einschraubanschlags hervorschaut, insbesondere, wenn der Abschnitt in definierter Weise hervorschaut, ist dem installierenden Personal signalisiert, dass das Einschrauben sachgerecht und vollständig erfolgt ist.

Das Material des weichelastischen Fortsatzes kann in einer Fortbildung der Erfindung einen Farbunterschied zum Material des Anschlussstutzens aufweisen und so sehr leicht erkannt werden, was für das installierende Personal besonders hilfreich ist.

In einer bevorzugten Ausbildung des Elastomereinsatzes ist dieser an die Raumkurve der Queröffnung in einer Hauptrohrleitung angepasst, um die Fluiddichtheit an dieser Stelle sicherzustellen.
Die Raumkurve weist Eigenschaften einer Sattelfläche auf.
Die Anpassung des Elastomereinsatzes an die Raumkurve der Queröffnung ist dabei derart ausgeführt, dass zwei "obere" und zwei "untere" sich jeweils gegenüberstehende Randabschnitte des Elastomereinsatzes, welche die Öffnung begrenzen, in die der Anschlussstutzen mit seinem Eingriffsende voran einsteck- und einschraubbar ist, ausgebildet sind.

Durch sich gegenüberstehende "obere" Randabschnitte, an denen jeweils ein Stirnflächenabschnitt der Stirnfläche ausgebildet ist, die sich entlang des gesamten Randes erstreckt, ist die Möglichkeit eröffnet, dass der Einschraubanschlag an diesen zwei gegenüberliegenden Stirnflächenabschnitten des Elastomereinsatzes mit seiner Anschlagfläche anliegt, wenn der Anschlussstutzen vollständig und axial in den Elastomereinsatz eingeschraubt ist.

Der Elastomereinsatz weist eine Spiegelebene auf und ist symmetrisch - bis auf das Innengewinde am konischen Schraubbereich - ausgebildet.

Es ist sehr vorteilhaft, an den beiden "oberen" Randabschnitten an den jeweiligen Stirnflächenabschnitten jeweils ein Anzeigeelement vorzusehen, die Anordnung also symmetrisch auszuführen.
Wenn je ein Abschnitt der weichelastischen Fortsätze auf beiden Seiten des Elastomereinsatzes nach außen gequetscht ist und über den Außenrand des Einschraubanschlags hervorschaut, insbesondere, wenn die Abschnitte in definierter Weise hervorschauen, ist dem installierenden Personal signalisiert, dass das Einschrauben sachgerecht und vollständig erfolgt ist.

In einer alternativen Ausführung kann ein Anzeigeelement bei der erfindungsgemäßen Anschlussvorrichtung vorgesehen sein, das einen Rotationsabschnitt und einen Anzeigefortsatz aufweist.
Bei dieser Ausführung ist das Anzeigeelement mit seinem Rotationsabschnitt in einer zur Form des Rotationsabschnitts etwa komplementär geformten Ausnehmung an der Stirnfläche des Elastomereinsatzes aufgenommen.

Der Anzeigefortsatz am Anzeigeelement ist vor dem Einschrauben des Anschlussstutzens winkelig zur Spiegelebene des Elastomereinsatzes ausgerichtet, wobei der Winkel bevorzugt 30° bis 70° beträgt. Hierzu kann die Ausnehmung so geformt sein, dass das winkelig zur Spiegelebene des Elastomereinsatzes in die Ausnehmung eingesetzte Anzeigeelement zunächst in dieser Stellung stabil in der Ausnehmung angeordnet bleibt. Dies kann in einfacher Weise durch ein Rastelement am Rotationsabschnitt und eine komplementäre Struktur zum Rastelement in der Ausnehmung realisiert sein.
Wenn der Einschraubanschlag beim Einschrauben des Anschlussstutzens in den Elastomereinsatz in Richtung der Stirnfläche des Elastomereinsatzes bewegt wird, kommt er mit dem Anzeigeelement in Kontakt und zwingt diesem beim weiteren Einschrauben eine Rotationsbewegung auf, so dass sich der Anzeigefortsatz des Anzeigeelements nach außen bewegt und schließlich axial nach außen gerichtet ist und über den Außenrand des Einschraubanschlags hervorschaut.
Soweit ein Rastelement am Rotationsabschnitt gemäß vorstehender Beschreibung ausgebildet ist, wird dieses beim Einschrauben des Anschlussstutzens in den Elastomereinsatz gelöst bzw. überwunden.
Wenn der Anzeigefortsatz über den Außenrand des Einschraubanschlags nach außen hervorschaut, insbesondere, wenn der Anzeigefortsatz in definierter Weise hervorschaut, ist dem installierenden Personal signalisiert, dass das Einschrauben sachgerecht und vollständig erfolgt ist.
Für die Anordnung der Anzeigeelemente, die einen Rotationsabschnitt und einen Anzeigefortsatz aufweisen an den beiden "oberen" Randabschnitten an den jeweiligen Stirnflächenabschnitten, bei der die Anordnung symmetrisch ausgeführt ist, gilt das bei den Anzeigeelementen in Form eines Fortsatzes vorstehend ausgeführte gleichermaßen.

In besonders vorteilhafter Weise kann bei der vorliegenden Erfindung vorgesehen sein, dass der Elastomereinsatz aus einem Elastomermaterial besteht oder ein Elastomermaterial enthält, wobei das Elastomermaterial bevorzugt ein Gummi oder ein Thermoplastisches Elastomer oder ein Kautschuk oder ein Nitrilkautschuk oder ein Butylkautschuk oder ein EPDM (Ethylen-Propylen-Dien-Kautschuk) oder ein SBR (Styrol-Butadien-Kautschuk) oder ein NBR (Nitril-Butadien-Kautschuk) ist und / oder der Anschlussstutzen aus einem Polymermaterial besteht oder ein Polymermaterial enthält, wobei das Polymermaterial bevorzugt ein Thermoplast, und besonders bevorzugt ein Polyolefin, wie beispielsweise ein Polypropylen oder ein Polyethylen oder ein Polybutylen, oder ein Copolymeres der Vorgenannten, oder ein vernetztes Polyolefin, insbesondere ein vernetztes Polyethylen, oder ein Polyvinylchlorid, oder ein Polyurethan ist.

Derartige Elastomermaterialien bzw. Polymermaterialien sind langlebig, inert, stabil, weisen ein geringes Gewicht auf, sind einfach handhabbar, leicht installierbar und können kostengünstig bereitgestellt werden. Insbesondere ist es auf diese Weise sehr einfach, aus diesen Materialien den Elastomereinsatz bzw. den Anschlussstutzen zu bilden.

Mit Vorteil kann ein solcher erfindungsgemäßer Elastomereinsatz bzw. ein solcher erfindungsgemäßer Anschlussstutzen mit Hilfe eines Polymerformgebungsverfahrens hergestellt sein.
Insbesondere durch ein Spritzgussverfahren und / oder ein Blasverfahren und / oder ein Thermoformverfahren und / oder ein Pressverfahren kann ein derartiger Elastomereinsatz bzw, ein derartiger Anschlussstutzen leicht fertigbar sein.

Alternativ kann vorgesehen sein, dass der Elastomereinsatz und / oder der Anschlussstutzen unter Verwendung eines generativen Fertigungsverfahrens, beispielsweise durch ein 3-D-Druckverfahren, hergestellt ist.
Hierzu kann mit Vorteil ein datenverarbeitungsmaschinenlesbares dreidimensionales Modell für die Herstellung genutzt werden.
Die Erfindung umfasst auch ein Verfahren zur Erzeugung eines datenverarbeitungsmaschinenlesbaren dreidimensionalen Modells zur Verwendung in einem Herstellungsverfahren für einen Elastomereinsatz und / oder einen Anschlussstutzen. Hierbei umfasst das Verfahren insbesondere auch die Eingabe von Daten, die einen Elastomereinsatz und / oder einen Anschlussstutzen darstellen, in eine Datenverarbeitungsmaschine und die Nutzung der Daten, um einen Elastomereinsatz und / oder einen Anschlussstutzen als dreidimensionales Modell darzustellen, wobei das dreidimensionale Modell geeignet ist zur Nutzung bei der Herstellung eines Elastomereinsatzes und / oder eines Anschlussstutzens. Ebenfalls umfasst ist bei dem Verfahren eine Technik, bei der die eingegebenen Daten eines oder mehrerer 3D-Scanner, die entweder auf Berührung oder berührungslos funktionieren, wobei bei letzteren Energie auf einen Elastomereinsatz und / oder einen Anschlussstutzen abgegeben wird und die reflektierte Energie empfangen wird, und wobei ein virtuelles dreidimensionales Modell eines Elastomereinsatzes und / oder eines Anschlussstutzens unter Verwendung einer computer-unterstützten Design-Software erzeugt wird.

Das Fertigungsverfahren kann ein generatives Pulverbettverfahren, insbesondere selektives Laserschmelzen (SLM), selektives Lasersintern (SLS), selektives Hitzesintern (Selective Heat Sintering - SHS), selektives Elektronenstrahlschmelzen (Electron Beam Melting - EBM / Electron Beam Additive Manufacturing - EBAM) oder Verfestigen von Pulvermaterial mittels Binder (Binder Jetting) umfassen. Das Fertigungsverfahren kann ein generatives Freiraumverfahren, insbesondere Auftragsschweißen, Wax Deposition Modeling (WDM), Contour Crafting, Metall-Pulver-Auftragsverfahren (MPA), Kunststoff-Pulver-Auftragsverfahren, Kaltgasspritzen, Elektronenstrahlschmelzen (Electron Beam Welding - EBW) oder Schmelzeschichtungsverfahren wie Fused Deposition Modeling (FDM) oder Fused Filament Fabrication (FFF) umfassen. Das Fertigungsverfahren kann ein generatives Flüssigmaterialverfahren, insbesondere Stereolithografie (SLA), Digital Light Processing (DLP), Multi Jet Modeling (MJM), Polyjet Modeling oder Liquid Composite Moulding (LCM) umfassen. Ferner kann das Fertigungsverfahren andere generative Schichtaufbauverfahren, insbesondere Laminated Object Modelling (LOM), 3D-Siebdruck oder die Lichtgesteuerte Elektrophoretische Abscheidung umfassen.

Die Aufgabe der vorliegenden Erfindung, ein Fluidleit-, -aufnahme- und -speichersystem anzugeben, erfährt ihre Lösung in Anspruch 5.

Das erfindungsgemäße Fluidleit-, -aufnahme- und -speichersystem umfasst eine Nebenrohrleitung, eine Hauptrohrleitung und / oder einen Schacht und / oder eine Wand, und eine Anschlussvorrichtung für eine Nebenrohrleitung in Kombination mit einer Queröffnung in einer Hauptrohrleitung, in einem Schacht oder in einer Wand gemäß vorstehender Beschreibung.

Anwendung findet die vorliegende Erfindung insbesondere im Bereich der Kanal- und Abwassertechnik.

Neben der geschilderten Anwendung gibt es weitere Anwendungsfelder in der Regenwasserbewirtschaftung, bei Hausanschlüssen, in Kläranlagen, in der Schwimmbadtechnik, in der Industrie, in der Landwirtschaft und in weiteren Bereichen.

Weitere wichtige Merkmale und Vorteile der Erfindung ergeben sich aus den Unteransprüchen, aus den Figuren und aus der zugehörigen Figurenbeschreibung.

Bevorzugte Ausführungsbeispiele der Erfindung sind in den Fig. dargestellt und werden in der nachfolgenden Beschreibung weiter ausgeführt.

Die Erfindung wird anhand der beigefügten Figuren näher erläutert.

Hierzu zeigt:
- Fig. 1: eine schematische seitliche Außenansicht eines Anschlussstutzens;
- Fig. 2: einen schematischen Querschnitt durch einen Elastomereinsatz;
- Fig. 3: ein Detail einer Anschlussvorrichtung in einer ersten Ausführung, nicht Teil der Erfindung, in einer schematischen teilweise geschnittenen seitlichen Außenansicht;
- Fig. 4: eine schematische teilweise geschnittene seitliche Außenansicht einer erfindungsgemäßen Anschlussvorrichtung in einer zweiten Ausführung;
- Fig. 5: ein Detail eines Elastomereinsatzes in einer zweiten Ausführung in einer schematischen teilweise geschnittenen seitlichen Außenansicht;
- Fig. 6: ein Detail einer Anschlussvorrichtung in einer zweiten Ausführung in einer schematischen teilweise geschnittenen seitlichen Außenansicht;
- Fig. 7: eine schematische geschnittene Detailansicht eines in einen Elastomereinsatz eingesteckten Anschlussstutzens;
- Fig. 8: eine seitliche Schnittansicht eines Anzeigeelements in einer zweiten Ausführung;
- Fig. 9: eine schematische geschnittene Detailansicht einer erfindungsgemäßen Anschlussvorrichtung in einer dritten Ausführung.

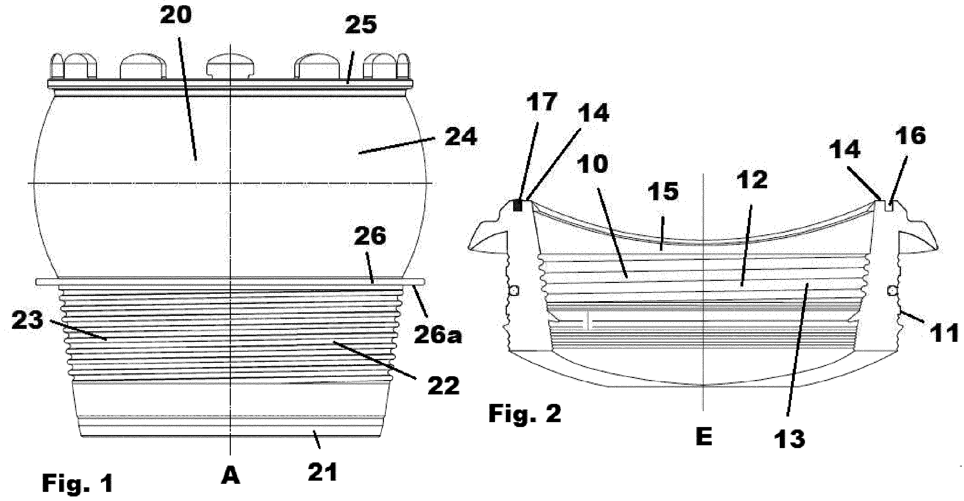

In der Fig. 1 ist eine schematische seitliche Außenansicht eines Anschlussstutzens 20 gezeigt.

Der Anschlussstutzen 20 weist ein Eingriffsende 21 auf, mit dem voran er in den Elastomereinsatz 10 einsteckbar und anschließend einschraubbar ist. Der Anschlussstutzen 20 umfasst weiterhin einen konischen Mittelteil 22, an dem ein Außengewinde 23 ausgebildet ist. Anschließend an den konischen Mittelteil 22 des Anschlussstutzens 20 ist ein Aufnahmeabschnitt 24 ausgebildet, der mit einem hier nicht gezeigten Nebenrohr fluiddicht verbindbar ist.

An den Aufnahmeabschnitt 24 des Anschlussstutzens 20 grenzt das Antriebsende 25 an, an den Fortsätze ausgebildet sind, die dazu geeignet sind, den Anschlussstutzen 20 mithilfe eines Drehwerkzeugs in den Elastomereinsatz 10 einzuschrauben.

Der Anschlussstutzen 20 weist zwischen dem konischen Mittelteil 22 und dem Aufnahmeabschnitt 24 einen Einschraubanschlag 26 auf.

Der Einschraubanschlag 26 steht senkrecht zur Achse A des Anschlussstutzens 20 und ist um den Anschlussstutzen 20 herumlaufend ausgebildet.

Am Einschraubanschlag 26 ist in Richtung des Eingriffsendes 21 eine Anschlagfläche 26a ausgebildet.

Der Anschlussstutzen 20 ist rotationssymmetrisch - bis auf das Außengewinde 23 am konischen Mittelteil 22 und Fortsätze am Antriebsende 25 - ausgebildet.

In der Fig. 2 ist ein schematischer Querschnitt durch einen Elastomereinsatz 10 gezeigt.

Der Elastomereinsatz 10 weist eine Außenseite 11 auf, die an die Queröffnung angepasst ist, in die er eingesetzt werden soll.

Die Innenseite 12 des Elastomereinsatzes 10 weist einen konischen Schraubbereich 13 auf, hierzu ist ein Innengewinde ausgebildet.

Der Elastomereinsatz 10 weist eine Öffnung 15 auf, in die der Anschlussstutzen 20 mit dem Eingriffsende 21 voran einsteckbar ist.

Am Elastomereinsatz 10 ist um die Öffnung 15 herum eine Stirnfläche 14 ausgebildet.

Die Stirnfläche 14 weist einander gegenüberliegend zwei Ausnehmungen 16 auf.

In die Ausnehmung 16 in der Stirnfläche 14 des Elastomereinsatzes 10 ist in der Fig. 2 auf der linken Seite ein Anzeigeelement 17 eingesetzt, das etwa pilzförmig gestaltet ist.

Der Elastomereinsatz 10 weist eine Spiegelebene E auf und ist symmetrisch - bis auf das Innengewinde am konischen Schraubbereich 13 - ausgebildet.

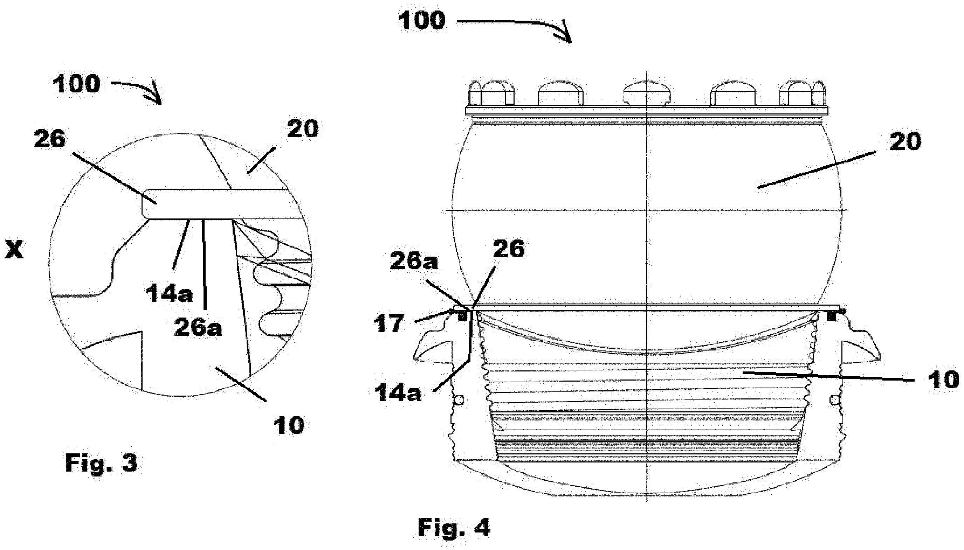

In der Fig. 3 ist ein Detail einer Anschlussvorrichtung 100 in einer ersten Ausführung, nicht Teil der Erfindung, in einer schematischen teilweise geschnittenen seitlichen Außenansicht dargestellt.

Die Bezugszeichen in Fig. 3 entsprechen denen aus den vorausgehenden Figuren.

Bei der Anschlussvorrichtung 100 ist der Anschlussstutzen 20 vollständig in den Elastomereinsatz 10 eingeschraubt. Zur Verdeutlichung ist in der Fig. 3 nur das Detail X vergrößert gezeigt, bei dem der Einschraubanschlag 26, der am Anschlussstutzen 20 ausgebildet ist, mit seiner Anschlagfläche 26a den Stirnflächenabschnitt 14a des Elastomereinsatzes 10 kontaktiert.

In dieser ersten Ausführung ist kein Anzeigeelement vorgesehen.

Wenn die Anschlagfläche 26a des Einschraubanschlags 26 des Anschlussstutzens 20 den Stirnflächenabschnitt 14a des Elastomereinsatzes 10 kontaktiert, ist der Anschlussstutzen 20 vollständig in den Elastomereinsatz 10 eingeschraubt, wodurch eine sachgerechte Verbindung des Anschlussstutzens 10 mit dem Elastomereinsatz 20 zur Anschlussvorrichtung 100 erfolgt ist.

In der Fig. 4 ist eine schematische teilweise geschnittene seitliche Außenansicht einer erfindungsgemäßen Anschlussvorrichtung 100 in einer zweiten Ausführung gezeigt.

Die Bezugszeichen in Fig. 4 entsprechen denen aus den vorausgehenden Figuren.

Der Anschlussstutzen 20 ist in den Elastomereinsatz 10 vollständig eingeschraubt. Dabei kontaktiert die Anschlagfläche 26a am Einschraubanschlag 26 des Anschlussstutzens 20 den Stirnflächenabschnitt 14a des Elastomereinsatzes 10. Hierbei wird das am Elastomereinsatz 10 angeordnete Anzeigeelement 17 zwischen der Anschlagfläche 26a und dem Stirnflächenabschnitt 14a ein Stück weit herausgequetscht und so von außen sichtbar. Das Sichtbarwerden des herausgequetschten Anzeigeelements 17 signalisiert dem installierenden Personal die sachgerechte Installation der Anschlussvorrichtung 100.

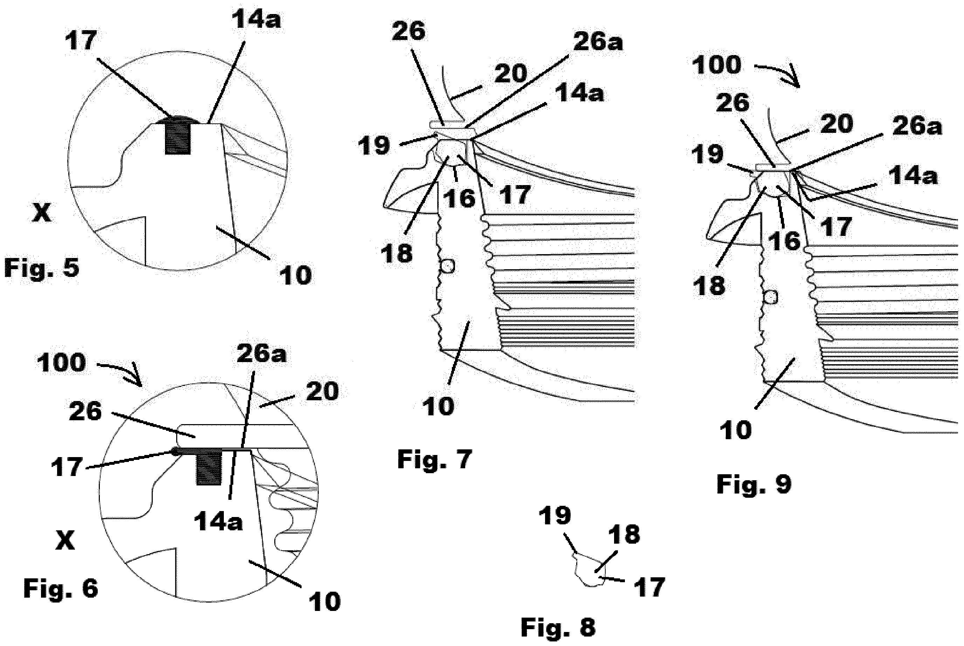

In der Fig. 5 ist ein Detail eines Elastomereinsatzes 10 in einer zweiten Ausführung in einer schematischen teilweise geschnittenen seitlichen Außenansicht dargestellt.

Die Bezugszeichen in Fig. 5 entsprechen denen aus den vorausgehenden Figuren.

Hier ist im Detail X ein Ausschnitt des Elastomereinsatzes 10, an dessen Stirnflächenabschnitt 14a ein Anzeigeelement 17 aufgenommen ist, gezeigt.

Das Anzeigeelement 17 ist pilzförmig gestaltet und mit seinem Fuß im Elastomereinsatz 10 verankert.

Die Kappe des pilzförmig gestalteten Anzeigeelements 17 ragt über die Oberfläche des Stirnflächenabschnitts 14a des Elastomereinsatzes 10 hinaus.

Das Anzeigeelement 17 ist aus einem weichelastischen Polymermaterial, welches sich leicht verformen lässt, gebildet.

In der Fig. 6 ist ein Detail einer Anschlussvorrichtung 100 in einer zweiten Ausführung in einer schematischen teilweise geschnittenen seitlichen Außenansicht gezeigt.

Die Bezugszeichen in Fig. 6 entsprechen denen aus den vorausgehenden Figuren.

In der Fig. 6 ist das Detail X einer Anschlussvorrichtung gezeigt, bei der der Anschlussstutzen 20 in den Elastomereinsatz 10 eingeschraubt ist.
Im Detail X ist dargestellt, dass die Anschlagfläche 26a am Einschraubanschlag 26 des Anschlussstutzens 20 beim vollständigen Einschrauben des Anschlussstutzens 20 in den Elastomereinsatz 10 den Stirnflächenabschnitt 14a des Elastomereinsatzes 10 kontaktiert. Hierbei ist das Anzeigeelement 17 ein Stück weit nach außen gequetscht und tritt zwischen dem Stirnflächenabschnitt 14a des Elastomereinsatzes 10 und der Anschlagfläche 26a des Einschraubanschlags 26 des Anschlussstutzens 20 nach außen hervor.

Durch das Hervortreten des Anzeigeelements 17 nach außen kann dies vom installierenden Personal gesehen werden und es signalisiert diesem, dass die Anschlussvorrichtung 100 sachgerecht installiert ist.

In der Fig. 7 ist eine schematische geschnittene Detailansicht eines in einen Elastomereinsatz 10 eingesteckten Anschlussstutzens 20 dargestellt.

Die Bezugszeichen in Fig. 7 entsprechen denen aus den vorangehenden Figuren.

In der Darstellung gemäß Fig. 7 ist der Anschlussstutzen 20 in den Elastomereinsatz 10 lediglich eingesteckt, aber noch nicht vollständig eingeschraubt.
Im Elastomereinsatz 10 ist eine Ausnehmung vorgesehen, in der ein Anzeigeelement 17 einer zweiten Art aufgenommen ist. Das Anzeigeelement 17 der zweiten Art weist einen Rotationsabschnitt 18 auf, der hinsichtlich seiner Form etwa komplementär zu Form der Ausnehmung 16 ausgebildet ist.

Am Anzeigeelement 17 ist ein Anzeigefortsatz 19 ausgebildet.

Das Anzeigeelement 17 ist in der Ausnehmung 16 des Elastomereinsatzes 19 derartig aufgenommen, dass der Anzeigefortsatz 19 des Anzeigeelements 17 winkelig zur Einsteckrichtung des Anschlussstutzens 20 in den Elastomereinsatz 10 angeordnet ist, wobei der Winkel etwa 45° beträgt.

In der Fig. 8 ist eine seitliche Schnittansicht eines Anzeigeelements 17 in einer zweiten Ausführung gezeigt.

Das Anzeigeelement 17 weist in der zweiten Ausführung einen Rotationsabschnitt 18 auf mit einem etwa kreisförmigen Querschnitt. Am Anzeigeelement 17 ist weiterhin ein Anzeigefortsatz 19 ausgebildet, der vom Rotationsabschnitt 18 seitlich weg steht.

In der Fig. 9 ist eine schematische geschnittene Detailansicht einer erfindungsgemäßen Anschlussvorrichtung 100 in einer dritten Ausführung gezeigt.

Die Bezugszeichen in Fig. 9 entsprechen denen aus den vorangehenden Figuren.

Die Anschlussvorrichtung 100 in der Fig. 9 ist gebildet durch vollständiges Einschrauben des Anschlussstutzens 20 in den Elastomereinsatz 10. Hierbei kontaktiert die Anschlagfläche 26a am Einschraubanschlag 26 des Anschlussstutzens 20 den Stirnflächenabschnitt 14a des Elastomereinsatzes 10. Durch die Annäherung der Anschlagfläche 26a des Einschraubanschlags 26 des Anschlussstutzens 20 an den Stirnflächenabschnitt 14a des Elastomereinsatzes 10 beim Einschrauben des Anschlussstutzens 20 in den Elastomereinsatz 10 zur Bildung der Anschlussvorrichtung 100 kommt die Anschlagfläche 26a mit dem Anzeigefortsatz 19 des Anzeigeelements 17 in Kontakt und zwingt diesem beim weiteren Einschrauben eine Rotationsbewegung auf. Hierbei wird der Anzeigefortsatz 19 des Anzeigeelements 17 aus der winkeligen Ausrichtung in eine etwa radiale Ausrichtung in Bezug auf die hier nicht gezeigte Achse A des Anschlussstutzens 20 gebracht.

Der Anzeigefortsatz 19 des Anzeigeelements 17 schaut dabei zwischen der Anschlagfläche 26a und dem Stirnflächenabschnitt 14a hervor und ist für das installierende Personal erkennbar. Hierdurch wird dem installierenden Personal signalisiert, dass der Anschlussstutzen 20 und der Elastomereinsatz 10 sachgerecht zur Anschlussvorrichtung 100 verbunden sind.

Es versteht sich, dass der Elastomereinsatz 10 hinsichtlich des aufgenommenen Anzeigeelements 17 in einer zweiten Ausführung symmetrisch ausgebildet ist, analog zur Fig. 4.

### Bezugszeichenliste

- 10: Elastomereinsatz
- 11: Außenseite
- 12: Innenseite
- 13: Schraubbereich
- 14: Stirnfläche
- 14a: Stirnflächenabschnitt
- 15: Öffnung
- 16: Ausnehmung
- 17: Anzeigeelement
- 18: Rotationsabschnitt
- 19: Anzeigefortsatz
- 20: Anschlussstutzen
- 21: Eingriffsende
- 22: konischer Mittelteil
- 23: Außengewinde
- 24: Aufnahmeabschnitt
- 25: Antriebsende
- 26: Einschraubanschlag
- 26a: Anschlagfläche
- 100: Anschlussvorrichtung
- 200: Fluidleit-, -aufnahme- und -speichersystem
- A: Achse
- E: Spiegelebene
- X: Detail

## Patentansprüche

1. Anschlussvorrichtung (100) für eine Nebenrohrleitung in Kombination mit einer Queröffnung in einer Hauptrohrleitung, in einem Schacht oder in einer Wand, umfassend:
einen hohlstopfenförmigen, relativ weichen Elastomereinsatz (10), dessen Außenseite (11) an die Queröffnung angepasst ist, und dessen Innenseite (12) einen konischen Schraubbereich (13) aufweist, und an dem eine Stirnfläche (14) ausgebildet ist, die die Öffnung (15) des Elastomereinsatzes (10) zumindest teilweise begrenzt, in die der Anschlussstutzen (20) einschraubbar ist, und
einen relativ härteren Anschlussstutzen (20), der ein Eingriffsende (21), einen konischen Mittelteil (22) mit Außengewinde (23), einen Aufnahmeabschnitt (24) und ein Antriebsende (25) aufweist,
wobei der Anschlussstutzen (20) zwischen dem konischen Mittelteil (22) und dem Aufnahmeabschnitt (24) einen Einschraubanschlag (26) aufweist,
wobei bei montierter Anschlussvorrichtung (100) der Einschraubanschlag (26) an einem Stirnflächenabschnitt (14a) des Elastomereinsatzes (10) anliegt, wenn der Anschlussstutzen (20) vollständig in den Elastomereinsatz (10) eingeschraubt ist,
wobei ein Anzeigeelement (17) vorgesehen ist, welches das vollständige Einschrauben des Anschlussstutzens (20) in den Elastomereinsatz (10) anzeigt.

2. Anschlussvorrichtung (100) nach Anspruch 1, **dadurch gekennzeichnet, dass** das Anzeigeelement (17) als weichelastischer Fortsatz ausgebildet ist.

3. Anschlussvorrichtung (100) nach Anspruch 1 oder 2, **dadurch gekennzeichnet, dass** das Anzeigeelement (17) einen Rotationsabschnitt (18) und einen Anzeigefortsatz (19) aufweist

4. Anschlussvorrichtung (100) nach einem der vorangehenden Ansprüche, **dadurch gekennzeichnet, dass** der Elastomereinsatz (10) aus einem Elastomermaterial besteht oder ein Elastomermaterial enthält, wobei das Elastomermaterial bevorzugt ein Gummi oder ein Thermoplastisches Elastomer oder ein Kautschuk oder ein Nitrilkautschuk oder ein Butylkautschuk oder ein EPDM (Ethylen-Propylen-Dien-Kautschuk) oder ein SBR (Styrol-Butadien-Kautschuk) oder ein NBR (Nitril-Butadien-Kautschuk) ist und / oder der Anschlussstutzen (20) aus einem Polymermaterial besteht oder ein Polymermaterial enthält, wobei das Polymermaterial bevorzugt ein Thermoplast, und besonders bevorzugt ein Polyolefin, wie beispielsweise ein Polypropylen oder ein Polyethylen oder ein Polybutylen, oder ein Copolymeres der Vorgenannten, oder ein vernetztes Polyolefin, insbesondere ein vernetztes Polyethylen, oder ein Polyvinylchlorid, oder ein Polyurethan ist.

5. Fluidleit-, -aufnahme- und -speichersystem (200) umfassend eine Nebenrohrleitung, eine Hauptrohrleitung und / oder einen Schacht und / oder eine Wand, und eine Anschlussvorrichtung (100) für eine Nebenrohrleitung in Kombination mit einer Queröffnung in einer Hauptrohrleitung, in einem Schacht oder in einer Wand nach einem der Ansprüche 1 bis 4.

## Claims

1. Connection device (100) for secondary piping in combination with a transverse opening in main piping, in a shaft or in a wall, comprising:
a relatively soft elastomer insert (10) in the form of a hollow plug, the outside (11) of which insert is adapted to the transverse opening, and the inside (12) of which has a conical screwing region (13), and on which an end face (14) is formed which at least partially delimits the opening (15) of the elastomer insert (10) into which the connecting branch (20) can be screwed, and
a relatively harder connecting branch (20), which has an engagement end (21), a conical middle part (22) with external thread (23), a receiving portion (24) and a drive end (25),
wherein the connecting branch (20) has a screwing-in stop (26) between the conical middle part (22) and the receiving portion (24),
wherein when the connection device (100) is assembled the screwing-in stop (26) lies against an end face portion (14a) of the elastomer insert (10) if the connecting branch (20) is screwed completely into the elastomer insert (10),
wherein an indicator element (17) is provided which indicates the full screwing-in of the connecting branch (20) into the elastomer insert (10).

2. Connection device (100) according to claim 1, **characterised in that** the indicator element (17) is formed as a flexible extension.

3. Connection device (100) according to claim 1 or 2, **characterised in that** the indicator element (17) has a rotation portion (18) and an indicator extension (19).

4. Connection device (100) according to one of the preceding claims, **characterised in that** the elastomer insert (10) consists of an elastomer material or contains an elastomer material, with the elastomer material preferably being a vulcanised rubber or a thermoplastic elastomer or a rubber or a nitrile rubber or a butyl rubber or an EPDM (ethylene/propylene/diene rubber) or an SBR (styrene/butadiene rubber) or an NBR (nitrile/butadiene rubber) and/or the connecting branch (20) consists of a polymer material or contains a polymer material, with the polymer material preferably being a thermoplastic material, and particularly preferably a polyolefin, such as for example a polypropylene or a polyethylene or a polybutylene, or a copolymer of the aforementioned, or a cross-linked polyolefin, in particular a cross-linked polyethylene, or a polyvinyl chloride, or a polyurethane.

5. Fluid-conducting, receiving and storage system (200) comprising secondary piping, main piping and/or a shaft and/or a wall, and a connection device (100) for secondary piping in combination with a transverse opening in main piping, in a shaft or in a wall, according to one of claims 1 to 4.

## Revendications

1. Dispositif de raccordement (100) pour une conduite secondaire en combinaison avec une ouverture transversale dans une conduite principale, dans une gaine ou dans un mur, comprenant :
un insert en élastomère (10) relativement souple en forme de bouchon creux, dont le côté extérieur (11) est adapté à l'ouverture transversale et dont le côté intérieur (12) comporte une zone de vissage (13) conique, et sur lequel est formée une surface frontale (14), qui limite au moins en partie l'ouverture (15) de l'insert en élastomère (10), dans laquelle le raccord (20) peut être vissé, et
un raccord (20) relativement plus dur, qui comporte une extrémité d'engagement (21), une partie centrale (22) conique dotée d'un filetage externe (23), une partie de réception (24) et une extrémité d'entraînement (25),
dans lequel le raccord (20) comporte, entre la partie centrale (22) conique et la partie de réception (24), une butée de vissage (26),
dans lequel, lorsque le dispositif de raccordement (100) est monté, la butée de vissage (26) appuie contre une partie de surface frontale (14a) de l'insert en élastomère (10), quand le raccord (20) est complètement vissé dans l'insert en élastomère (10),
dans lequel un élément d'indication (17) est prévu, qui indique le vissage complet du raccord (20) dans l'insert en élastomère (10).

2. Dispositif de raccordement (100) selon la revendication 1, **caractérisé en ce que** l'élément d'indication (17) est réalisé sous la forme d'une saillie élastique souple.

3. Dispositif de raccordement (100) selon la revendication 1 ou 2, **caractérisé en ce que** l'élément d'indication (17) comporte une partie de rotation (18) et une saillie d'indication (19).

4. Dispositif de raccordement (100) selon l'une des revendications précédentes, **caractérisé en ce que** l'insert en élastomère (10) est constitué d'un matériau élastomère ou contient un matériau élastomère, le matériau élastomère étant de préférence une gomme ou un élastomère thermoplastique ou un caoutchouc ou un caoutchouc nitrile ou un caoutchouc butyle ou un EPDM (caoutchouc éthylène-propylène-diène) ou un SBR (caoutchouc styrène-butadiène) ou un NBR (caoutchouc butadiène-acrylonitrile) et/ou le raccord (20) est constitué d'un matériau polymère ou contient un matériau polymère, le matériau polymère étant de préférence un thermoplastique, et de manière particulièrement préférée une polyoléfine, comme par exemple un polypropylène ou un polyéthylène ou un polybutylène, ou un copolymère des matériaux susmentionnés, ou une polyoléfine réticulée, en particulier un polyéthylène réticulé, ou un polychlorure de vinyle ou un polyuréthane.

5. Système de guidage, de réception et de stockage de fluide (200) comprenant une conduite secondaire, une conduite principale et/ou une gaine et/ou un mur, et un dispositif de raccordement (100) pour une conduite secondaire en combinaison avec une ouverture transversale dans une conduite principale, dans une gaine ou dans un mur selon l'une des revendications 1 à 4.
